# EUROPEAN PATENT APPLICATION

(11) **EP 4 269 337 A1**
(43) Date of publication of application: **01.11.2023**
(21) Application number: 21908750.9
(22) Date of filing: 13.10.2021
(51) Int. Cl.: C01B 25/37, C01G 49/02, C22B 7/00, C22B 26/12, H01M 10/0525, H01M 10/54

(54) **METHOD FOR RECOVERING LITHIUM IN LITHIUM IRON PHOSPHATE WASTE AND APPLICATION THEREOF**

(30) Priority: 25.12.2020 CN 202011566943
(71) Applicant: Hunan Brunp Recycling Technology Co., Ltd., Changsha, Hunan 410600 (CN); Guangdong Brunp Recycling Technology Co., Ltd, Foshan, Guangdong 528137 (CN); Hunan Brunp EV Recycling Co., Ltd., Changsha, Hunan 410600 (CN)
(72) Inventor: ZHENG, Xianliang, Changsha, Hunan 410600 (CN); QIAO, Yanchao, Changsha, Hunan 410600 (CN); CHEN, Ruokui, Changsha, Hunan 410600 (CN); TAN, Feng, Changsha, Hunan 410600 (CN); SUN, Xie, Changsha, Hunan 410600 (CN); LI, Changdong, Changsha, Hunan 410600 (CN)
(74) Representative: Meyer, Thorsten
(86) International application number: PCT/CN2021/123416
(87) International publication number: WO 2022/134749

(57) **Abstract**

Disclosed are a method for recovering lithium from lithium iron phosphate waste and application thereof. The method comprises the following steps: (1) adding water to lithium iron phosphate waste to obtain a lithium iron phosphate slurry (2) adding a soluble iron salt to the lithium iron phosphate slurry to perform a reaction, and filtering a resulting product to obtain an iron phosphate slag and a filtrate containing Li⁺ and Fe²⁺; (3) adding an oxidizing agent to the filtrate to perform a reaction and filtering a resulting product to obtain iron hydroxide and a filtrate containing Li⁺, Fe³⁺; (4) performing a multi-stage counter-current circulation leaching to the mixture of the filtrate and the lithium iron phosphate waste to obtain a lithium solution. The present disclosure adopts a soluble iron salt, which is a strong acid-weak base salt capable of accelerating the conversion of lithium iron phosphate, and followed by an oxidation reaction with an oxidizing agent. The direct recovery rate of iron phosphate slag in one conversion is about 98.5%, and the direct recovery rate of lithium is about 98.5%.

## Description

### TECHNICAL FIELD

The present disclosure relates to the technical field of waste lithium battery material recycling, and in particular to a method for recovering lithium from waste lithium iron phosphate materials and application thereof.

### BACKGROUND

Lithium iron phosphate is one of the most widely used lithium-ion battery materials at present, which is regarded as the future development direction of lithium-ion battery by many people in the industry. With the blowout development of the new energy market of lithium battery since the 21st century, the problem of disposing waste lithium iron phosphate batteries has been increasingly prominent.

At present, the technologies for recycling waste lithium iron phosphate battery cathode materials are pyrometallurgical and hydrometallurgical., the pyrometallurgy method is mainly to repair lithium iron phosphate to achieve a secondary utilization, but it is not widely used because of its complex process, high energy consumption and non-implementation. In hydrometallurgy method, the cathode materials are treated by acid and leached to obtain a lithium iron solution, which is separated afterwards. In the related technology, lithium iron phosphate is subjected to the process of heat treatment-acid leaching-iron phosphate precipitation- lithium carbonate precipitation waste - synthesis of lithium iron phosphate, by which lithium iron phosphate waste is re-prepared to a lithium iron phosphate material. However, due to the complex composition of the raw materials in this process, a large amount of impurities (such as aluminum) will inevitably be included in the iron phosphate, which affects the performance of the synthesized lithium iron phosphate material, and it is difficult to guarantee the lithium recovery rate of the lithium carbonate recovered by this method. The high-efficiency separation of lithium and iron phosphate is realized via oxidation roasting-phosphoric acid leaching-liquid/solid separation- lithium carbonate precipitation process in another related technology, producing a good effect. However, the recovery of phosphorus resources and the consumption of acid are not considered, and the cost is relatively high. In another related art, waste lithium iron phosphate batteries are sorted to obtain lithium-containing cathode powder, and a certain amount of acid is added to the powder to control the pH 2.5-6.5, obtaining lithium sulfate solution and iron phosphate precipitation. Lithium sulfate is used to prepare lithium phosphate and iron phosphate precipitation is turned into iron orthophosphate by calcination. The method has a simple process and a high lithium recovery rate, but it still adopts a traditional acid soaking process, which consumes acid and has a high cost.

### SUMMARY OF THE INVENTION

The present disclosure aims to solve at least one of the technical problems existing in the above-mentioned prior art. To this end, the present disclosure provides a method for recovering lithium from lithium iron phosphate waste. A wet recovery process without acid or alkali consumption is adopted in the method, recovering Li in LiFePO4 waste, recovering phosphorus and iron in the form of iron phosphate and iron hydroxide, realizing comprehensive resource recovery and utilization.

In order to achieve the aforementioned objective, the following technical solution is adopted in the present disclosure.

A method for recovering lithium from lithium iron phosphate waste comprises the following steps:
(1) Adding water to lithium iron phosphate waste to obtain a lithium iron phosphate slurry;
(2) Adding a soluble iron salt to the lithium iron phosphate slurry to perform a reaction, and filtering the resulting product to obtain a filtrate containing Li⁺, Fe²⁺ and iron phosphate slag;
(3) Adding an oxidizing agent to the filtrate containing Li⁺ and Fe²⁺ to perform a reaction, and filtering the resulting product to obtain a filtrate containing Li⁺, Fe³⁺ and iron hydroxide;
(4) Mixing the filtrate containing Li⁺ and Fe³⁺ with lithium iron phosphate waste to obtain a mixture, and subjecting the mixture to a multi-stage counter-current circulation leaching to obtain a lithium solution.

In some embodiments, in step (1), the lithium iron phosphate waste and water are in a solid-to-liquid (mass-volume) ratio of (3-10): 1kg/L. In some other embodiments, the lithium iron phosphate waste and water are in a solid-liquid ratio of (6-7): 1kg/L

In some embodiments, the soluble iron salt in step (2) is at least one selected form the group consisting of iron sulfate, iron nitrate and iron chloride.

In some embodiments, in step (2), iron in the soluble iron salt has a molar amount of 1.1 - 1.3 times that of lithium iron phosphate.

When the soluble iron salt is ferric chloride, the reaction in step (2) has a chemical equation of:

FeCl₃+LiFePO₄→+LiCl+FeCl₂+FePO₄↓

In some embodiments, in step (2), the reaction is carried out for 30 to 90 minutes, and the reaction temperature is 40°C to 80°C.

In some embodiments, in step (3), the oxidant is at least one selected from the group consisting of oxygen, ozone, hydrogen peroxide, sodium hypochlorite and sodium chlorate.

In some embodiments, in step (3), the reaction is carried out for 30 to 80 min, and the reaction temperature is 50°C to 80°C.

The reaction in step (3) has a chemical equation of:

12FeCl₂+3O₂+6H₂O→8FeCl₃+4Fe(OH)₃↓

Since lithium iron phosphate only reacts with an oxidizing agent under acidic conditions, it is not feasible to directly oxidize it with an oxidizing agent. There are three reasons for adding soluble iron salt to perform the reaction in this application: (1) The soluble iron salt is a strong acid-weak base salt. The aqueous solution obtained by dissolving the salt in water is acidic and accelerates the conversion of lithium iron phosphate; (2) During the reaction between the lithium iron phosphate and the trivalent soluble iron salt, the free trivalent iron ions can directly combine with phosphate to form iron phosphate precipitation, which does not involve a redox reaction; (3) There is no consumption of acid and alkali.

In some embodiments, in step (4), the multi-stage counter-current leaching is performed with 3-n cycles, and the obtained lithium chloride solution has an iron content of less than 0.5%, wherein 3<n≤15.

In some embodiments, in step (4), the multi-stage countercurrent circulation leaching is carried out at a temperature of 40°C to 80°C.

In some embodiments, in step (4), the multi-stage counter-current circulation leaching is carried out by mixing the filtrate containing Li⁺ and Fe³⁺ with the lithium iron phosphate waste, and then repeating steps (2) and (3) to finally obtain a lithium solution. The recovery rate of the lithium solution is greater than 99%.

The present disclosure also provides the application of the above-mentioned method in battery recycling.

Advantages of the present disclosure:
(1) The present disclosure adopts a soluble iron salt. The soluble iron salt is a strong acid-weak base salt, which can accelerate the conversion of lithium iron phosphate. And followed by an oxidation reaction with an oxidizing agent, the direct recovery rate of iron phosphate slag during one conversion reached about 98.5%, and the direct recovery rate of lithium is around 98.5%.
(2) Using the method of the present disclosure to recover lithium from lithium iron phosphate waste, the lithium solution obtained has a concentration of above 25g/L, the concentration of iron in the solution is controlled below 10 ppm, and the recovery rate of iron phosphate after the multi-stage circulation leaching can reach more than 99%. The recovery rate of lithium can reach more than 99%. The present disclosure has simple process, no acid and alkali consumption in the whole process, small amount of slag, low equipment requirements, low energy consumption cost, high product value, and considerable economic benefits.

### BRIEF DESCRIPTION OF DRAWINGS

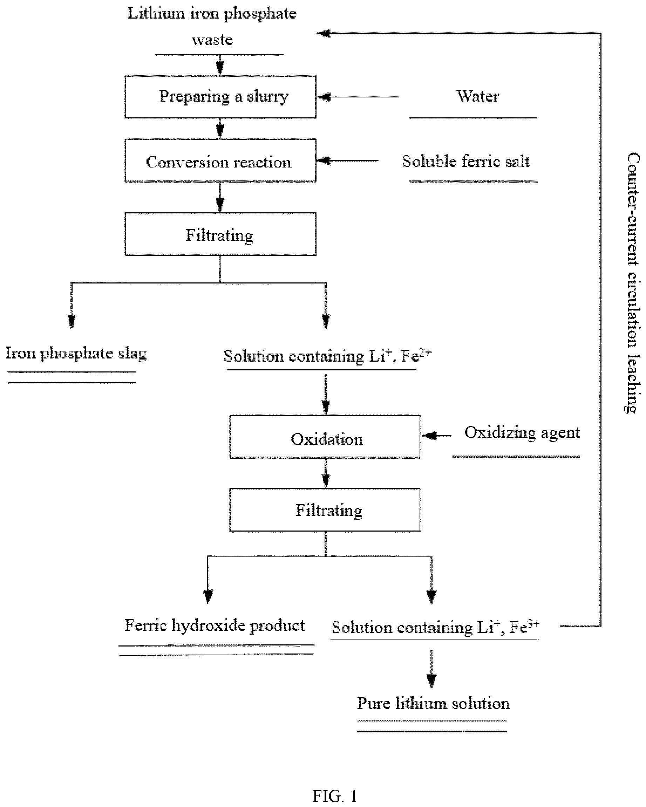

FIG. 1 is a process flow diagram of a method for recovering lithium from lithium iron phosphate waste in Example 1 of the present disclosure.

### DETAILED DESCRIPTION OF THE ILLUSTRATED EXAMPLES

In order to fully understand the present disclosure, the preferred experimental scheme of the present disclosure will be described below in conjunction with examples to further illustrate the characteristics and advantages of the present disclosure. Any change or alteration that does not deviate from the gist of the present disclosure can be understood by those skilled in the art. The scope of protection of the present disclosure is determined by the scope of the claims.

Where specific conditions are not indicated in the examples of the present disclosure, it shall be carried out under the conventional conditions or the conditions recommended by the manufacturer. The raw materials, reagents, etc. used without indicating their manufacturers are all conventional products commercially available.

### Example 1

The method for recovering lithium from lithium iron phosphate waste of this embodiment comprises the following steps:
(1) Mixing 100 g of 96.8% (mass fraction) lithium iron phosphate waste and 600 ml of pure water to obtain a lithium iron phosphate slurry;
(2) Adding 173 grams of ferric chloride to the slurry obtained in step (1) to perform a reaction at a temperature of 50°C for 45 min, and filtering a resulting product to obtain 700 ml of a solution containing lithium chloride and ferrous chloride, and 95.7 grams of iron phosphate slag;
(3) Introducing oxygen into the solution containing lithium chloride and ferrous chloride obtained in step (2) to perform a reaction at 50°C for 50 minutes, and filtering a resulting product to obtain a solution of lithium chloride and ferric chloride, and a ferric hydroxide product;
(4) Subjecting the solution of lithium chloride and ferric chloride in step (3) and the lithium iron phosphate waste in step (1) to a 5-stages counter-current circulation leaching to enrich the lithium content while reducing the iron content to obtain 800 ml of a pure lithium solution, which has a Li content of 13.89 g/L and a Fe content of 5.64 g/L.

Although the counter-current circulation leaching was only performed for 5 stages, the Li content has reached 13.89 g/L, and the lithium recovery rate is 99.03%. The Fe with a content of 5.64g/L will be returned and consumed in the counter-current circulation leaching.

Figure 1 is a process flow diagram of the method for recovering lithium in lithium iron phosphate waste in Example 1 of the present disclosure. From Figure 1, it can be seen that the lithium iron phosphate waste is mixed with water to obtain a slurry, and then a soluble iron salt is added to the slurry for a conversion reaction and then an oxidation reaction was performed with an oxidizing agent to obtain iron phosphate, iron hydroxide product and a pure lithium solution.

### Example 2

The method for recovering lithium from lithium iron phosphate waste of this embodiment comprises the following steps:
(1) Mixing 100 g of 96.8% (mass fraction) lithium iron phosphate waste and 700 ml of pure water to obtain a lithium iron phosphate slurry;
(2) Adding 173 grams of ferric chloride to the slurry obtained in step (1) to perform a reaction at a temperature of 40°C for 30 min, and filtering the resulting product to obtain 800 ml of a solution containing lithium chloride and ferrous chloride, and 95.0 grams of iron phosphate slag;
(3) Introducing ozone into the solution containing lithium chloride and ferrous chloride obtained in step (2) to perform a reaction at 50°C for 40 min, and filtering the resulting product to obtain a solution of lithium chloride and ferric chloride, and a ferric hydroxide product;
(4) Subjecting the solution of lithium chloride and ferric chloride in step (3) and the lithium iron phosphate waste in step (1) to a 10-stages counter-current circulation leaching to enrich the lithium content while reducing the iron content to obtain 900 ml of a pure lithium solution, which has a Li content of 14.04 g/L and a Fe content of 0.66 g/L.

### Example 3

The method for recovering lithium from lithium iron phosphate waste of this embodiment comprises the following steps:
(1) Mixing 100 g of 96.8% (mass fraction) lithium iron phosphate waste and 800 ml of pure water to obtain a lithium iron phosphate slurry;
(2) Adding 173 grams of ferric chloride to the slurry obtained in step (1) to perform a reaction at a temperature of 60°C for 30 min, and filtering the resulting product to obtain 900 ml of a solution containing lithium chloride and ferrous chloride, and 93.9 grams of iron phosphate slag;
(3) Introducing hydrogen peroxide into the solution containing lithium chloride and ferrous chloride obtained in step (2) to perform a reaction at 60°C for 30 min, and filtering the resulting product to obtain a solution of lithium chloride and ferric chloride, and a ferric hydroxide product;
(4) Subjecting the solution of lithium chloride and ferric chloride in step (3) and the lithium iron phosphate waste in step (1) to a 15-stages counter-current circulation leaching to enrich the lithium content while reducing the iron content to obtain 1000 ml of a pure lithium solution, which has a Li content of 12.83 g/L and a Fe content of 78.4 mg/L.

### Example 4

The method for recovering lithium from lithium iron phosphate waste of this embodiment comprises the following steps:
(1) Mixing 100 g of 90.8% (mass fraction) lithium iron phosphate waste and 500 ml of pure water to obtain a lithium iron phosphate slurry;
(2) Adding 114.9 grams of ferric sulfate to the slurry obtained in step (1) to perform a reaction at a temperature of 60°C for 35 min, and filtering the resulting product to obtain 550 ml of a solution containing lithium sulfate and ferrous sulfate, and 86.0 grams of iron phosphate slag;
(3) Introducing oxygen into the solution containing lithium sulfate and ferrous sulfate obtained in step (2) to perform a reaction at 60°C for 45 min, and filtering the resulting product to obtain a solution of lithium sulfate and ferric sulfate, and a ferric hydroxide product;
(4) Subjecting the solution of lithium sulfate and ferric sulfate in step (3) and the lithium iron phosphate waste in step (1) to a 10-stages counter-current circulation leaching to enrich the lithium content while reducing the iron content to obtain 600 ml of a pure lithium solution, which has a Li content of 19.24 g/L and a Fe content of 0.89 mg/L.

### Example 5

The method for recovering lithium from lithium iron phosphate waste of this embodiment comprises the following steps:
(1) Mixing 100 g of 90.8% (mass fraction) lithium iron phosphate waste and 300 ml of pure water to obtain a lithium iron phosphate slurry;
(2) Adding 115 grams of ferric sulfate to the slurry obtained in step (1) to perform a reaction at a temperature of 50°C for 35 min, and filtering the resulting product to obtain 350 ml of a solution containing lithium sulfate and ferrous sulfate, and 84.5 grams of iron phosphate slag;
(3) Introducing oxygen into the solution containing lithium sulfate and ferrous sulfate obtained in step (2) to perform a reaction at 50°C for 45 min, and filtering the resulting product to obtain a solution of lithium sulfate and ferric sulfate, and a ferric hydroxide product;
(4) Subjecting the solution of lithium sulfate and ferric sulfate in step (3) and the lithium iron phosphate waste in step (1) to a 10-stages counter-current circulation leaching to enrich the lithium content while reducing the iron content to obtain 400 ml of a pure lithium solution, which has a Li content of 28.86 g/L and a Fe content of 1.335 mg/L.

### Comparative Example 1

The method for recovering lithium from lithium iron phosphate waste of this embodiment comprises the following steps:
(1) Mixing 100 g of 90.8% (mass fraction) lithium iron phosphate waste and 300 ml of pure water to obtain a lithium iron phosphate slurry;
(2) Adding 150 grams of copper sulfate to the slurry obtained in step (1) to perform a reaction at a temperature of 50°C for 35 min, and filtering the resulting product to obtain 350 ml of a solution containing lithium sulfate, ferrous sulfate and copper sulfate, and 103.5 grams of unreacted lithium iron phosphate slag and a copper phosphate slag;
(3) Introducing oxygen into the solution containing lithium sulfate, ferrous sulfate and copper sulfate obtained in step (2) to perform a reaction at 50°C for 45 min, and filtering the resulting product to obtain a solution of lithium sulfate and ferric sulfate, and a copper hydroxide slag;
(4) Subjecting the solution of lithium sulfate and ferric sulfate in step (3) and the lithium iron phosphate waste in step (1) to a 10-stages counter-current circulation leaching to obtain 400 ml of a pure lithium solution, which has a Li content of 4.64 g/L and a Fe content of 0.96 g/L.

**Table 1**

| Name | Lithium solution | | Ferric hydroxide product |
|---|---|---|---|
| | Li content | Fe content | |
| Example 1 | 13.89g/L | 5.64g/L | 99.78g |
| Example 2 | 14.04g/L | 0.66g/L | 112.77g |
| Example 3 | 12.83g/L | 78.4mg/L | 113.76g |
| Example 4 | 19.24g/L | 0.89mg/L | 61.47g |
| Example 5 | 28.86g/L | 1.335mg/L | 61.52g |
| Comparative Example 1 | 4.64g/L | 0.96g/L | / |

**Table 2**

| Name | One leaching | | Multi-stage circulation leaching | |
|---|---|---|---|---|
| | Lithium recovery rate % | Ferric phosphate recovery rate % | Lithium recovery rate % | Ferric phosphate recovery rate % |
| Example 1 | 98.62 | 98.65 | 99.03 | 99.15 |
| Example 2 | 98.79 | 98.95 | 99.52 | 99.46 |
| Example 3 | 98.45 | 98.52 | 99.32 | 99.26 |
| Example 4 | 98.88 | 98.89 | 99.23 | 99.34 |
| Example 5 | 98.36 | 98.22 | 99.46 | 99.58 |
| Comparative Example 1 | 20.56 | 20.15 | 24.09 | 23.64 |

According to the data analysis of Table 1, it is known that in Example 5 of the present disclosure, the lithium concentration can be enriched to more than 25g/L through the multi-stage countercurrent leaching. In Example 4, the Fe concentration is reduced to less than 1 mg/L. And the soluble iron salt added are all recovered in the form of iron hydroxide products. According to the data analysis in Table 2, the direct recovery rate of the converted iron phosphate slag in Examples 1-5 of the present disclosure is about 98.5%, the direct recovery rate of lithium is about 98.5%, and the lithium recovery rate obtained by the multi-stage leaching can reach more than 99%. The recovery rate of iron phosphate slag reaches more than 99%. Based on the data of Comparative Example 1 in Table 1 and Table 2, it is known that if the soluble iron salt of the present disclosure is changed to other soluble strong acid-weak base salts, the lithium recovery rate is low, and the lithium iron phosphate waste cannot be recycled efficiently and comprehensively.

The method for recovering lithium form lithium iron phosphate waste and application thereof provided by the present disclosure are described in detail above. Specific examples are used in this article to illustrate the principle and implementation of the present disclosure. The description of the above examples is only used to help understand the method and core idea of the present disclosure, including the best mode, and also enables any person skilled in the art to practice the present disclosure, including manufacturing and using any device or system, and implementing any combined method. It should be pointed out that for those of ordinary skill in the art, without departing from the principle of the present disclosure, several improvements and modifications can be made to the present disclosure, and these improvements and modifications also fall within the protection scope of the claims of the present disclosure. The scope of patent protection of the present disclosure is defined by the claims, and may include other embodiments that those skilled in the art can think of. If these other embodiments have structural elements that are not different from the literal expression of the claims, or if they include equivalent structural elements that are not substantially different from the literal expression of the claims, these other embodiments should also be included in the scope of the claims.

## Claims

1. A method for recovering lithium from lithium iron phosphate waste comprises the following steps:
(1) adding water to the lithium iron phosphate waste to obtain a lithium iron phosphate slurry;
(2) adding a soluble iron salt to the lithium iron phosphate slurry to perform a reaction, and filtering a resulting product to obtain an iron phosphate slag and a filtrate containing Li⁺, Fe²⁺;
(3) adding an oxidizing agent to the filtrate containing Li⁺, Fe²⁺ to perform a reaction, and filtering to obtain iron hydroxide and a filtrate containing Li⁺, Fe³⁺;
(4) mixing the filtrate containing Li⁺, Fe³⁺ with the lithium iron phosphate waste to obtain a mixture, and subjecting the mixture to a multi-stage counter-current circulation leaching process to obtain a lithium solution.

2. The method according to claim 1, wherein in step (1), the lithium iron phosphate waste and the water are in a solid-to-liquid ratio of (3-10): 1.

3. The method according to claim 1, wherein in step (2), the soluble iron salt is at least one selected from the group consisting of ferric sulfate, ferric nitrate and ferric chloride.

4. The method according to claim 3, wherein in step (2), a molar amount of iron in the soluble iron salt is 1.1 - 1.3 times a molar amount of iron in the lithium iron phosphate slurry.

5. The method according to claim 1, wherein in step (2), the reaction is carried out at a temperature of 40°C - 80°C for 30 - 90 min.

6. The method according to claim 1, wherein in step (3), the oxidizing agent is at least one selected from the group consisting of oxygen, ozone, hydrogen peroxide, sodium hypochlorite and sodium chlorate.

7. The method according to claim 1, wherein in step (3), the reaction is carried out at a temperature of 50°C - 80°C for 30 - 80 min.

8. The method according to claim 1, wherein in step (4), the multi-stage counter-current leaching process is performed for 3 - n cycles, and iron in the lithium solution obtained has a mass content of 0.5% or less; wherein 3<n≤15.

9. The method according to claim 1, wherein in step (4), the multi-stage counter-current circulation leaching process is performed at a temperature of 40°C - 80°C; the multi-stage counter-current circulation leaching process comprises the steps of mixing the filtrate containing Li⁺, Fe³⁺ with the lithium iron phosphate waste, repeating steps (2) and (3) to finally obtain a lithium solution; a recovery rate of the lithium solution is greater than 99%.

10. Application of the method of any one of claims 1-9 in battery recycling.
